Europäisches Patentamt

European Patent Office

Office européen des brevets

(11) Publication number: **0 478 848 A1**

# (12) EUROPEAN PATENT APPLICATION

(21) Application number: **90202613.7**

(22) Date of filing: **01.10.90**

(51) Int. Cl.5: **A47G 19/00, A23L 1/164**

(43) Date of publication of application:
**08.04.92 Bulletin 92/15**

(84) Designated Contracting States:
**AT BE CH DE DK ES FR GB GR IT LI LU NL SE**

(71) Applicant: **UNILEVER NV**
**Burgemeester s'Jacobplein 1 P.O. Box 760**
**NL-3000 DK Rotterdam(NL)**

(72) Inventor: **Liedtke, Heinz**
**Langnese-Iglo GmbH, Luther Weg 50**
**W-3050 Wunsdorf 1(DE)**
Inventor: **Sandmann, Barbara**
**Langnese-Iglo GmbH, Luther Weg 50**
**W-3050 Wunsdorf 1(DE)**

(74) Representative: **Keppels, Willem Richard**
**Engelbertus Gerardus, Drs. et al**
**Unilever N.V. Patent Division P.O.Box 137**
**NL-3130 AC Vlaardingen(NL)**

(54) **Easy opening container.**

(57) Easy opening container comprising particulate cereals, nuts and frozen fruit.

FIG.1

The present invention relates to a container comprising particulate cereals, nuts and fruit, to be prepared for consumption by adding a liquid such as water, fruit juice, milk, butter milk or yoghurt, with some stirring if necessary.

Muesli is shelf stable and is usually mainly composed of cereals such as rolled oats, wheat, wheat germs, puffed rice and/or barley, nuts such as wall nuts, hazel nuts, pecan nuts, almonds, grape stones and dried fruits such as raisins, plums, dried apricots and dried currants. After preparing it for consumption by adding a liquid as exemplified above the dried fruits stay leathery at least for considerable time and many consumers do not appreciate that.

A primary object of the invention is to provide a container packed with instant food, which can be easily prepared for consumption and which comprises less leathery fruit ingredients than usual muesli does. Another object of the invention is to provide such container packed with instant food which can be prepared for consumption by simply adding water.

Still another object is to provide a container containing the food, in which the food can be prepared for consumption and from which the food can be consumed by spooning, drinking and sucking.

The invention provides thereto a container comprising particulate cereals, nuts and frozen fruit.

For preparation the container is opened, liquid such as water, preferably hot, milk or fruit juice is added, after which the contents of the container are stirred, which may be done by shaking. In a preferred embodiment the container is shaped as a beaker or tub and closed with an easy opening closure means. For enabling this shaking quickly, easily and without spilling preferably the container should be reclosable in a liquid tight manner.

For obtaining a muesli meal with milk without the requirement to have milk available the container may additionally comprise at least partly dehydrated milk ingredients, such as spray dried milk, milk powder, yoghurt powder etcetera.

In practice some frozen fruit is often experienced as being sour and for remedying this sweetener may be added to the fruit such as saccharose, low calorie sugars, artificial sweeteners etcetera in such a manner that the added sweetener is contained in the body of the fruit.

In order that the thawing up and any previous sweetening is accelerated the fruit may very well be diced, i.e. cut into pieces having a suitable size for consumption.

In order that the invented product really can be used as "fast food" for consumption while walking or during other activities the container is preferably provided with a mouthpiece which is initially closed but can be opened before consumption. The opening in the mouthpiece should be such that the contents of the container can be sucked through.

For conveniently dosing the required amount of liquid the container in a preferred embodiment is provided with a lid which in inverted position can contain liquid and which bears a volumetric mark which is visible on the inside.

The invention will be illustrated and exemplified in the following description of the drawing and in some non-limiting examples.

In the drawing

Fig 1 shows a closed container in vertical section,

Fig 2 shows the opened container having its lid inverted.

In the drawing a container 1 is shown, comprising a beaker 2 and a lid 3 fitting thereon in a liquid tight manner. The beaker is made of rigid polymeric material and has outward circumferential ridge 4 slightly below the upper rim 5. The lid is provided with an internal shoulder 6, abutting against the upper rim 5 of the beaker. In a skirt extending below the shoulder 6 a groove 8 is arranged for accommodating the ridge 4 and closing the beaker in a liquid tight manner. For easily closing the beaker 2 with the lid 3 the latter is made of a slightly more flexible polymeric material, enabling the lid 2 to elastically snap over the ridge 4.

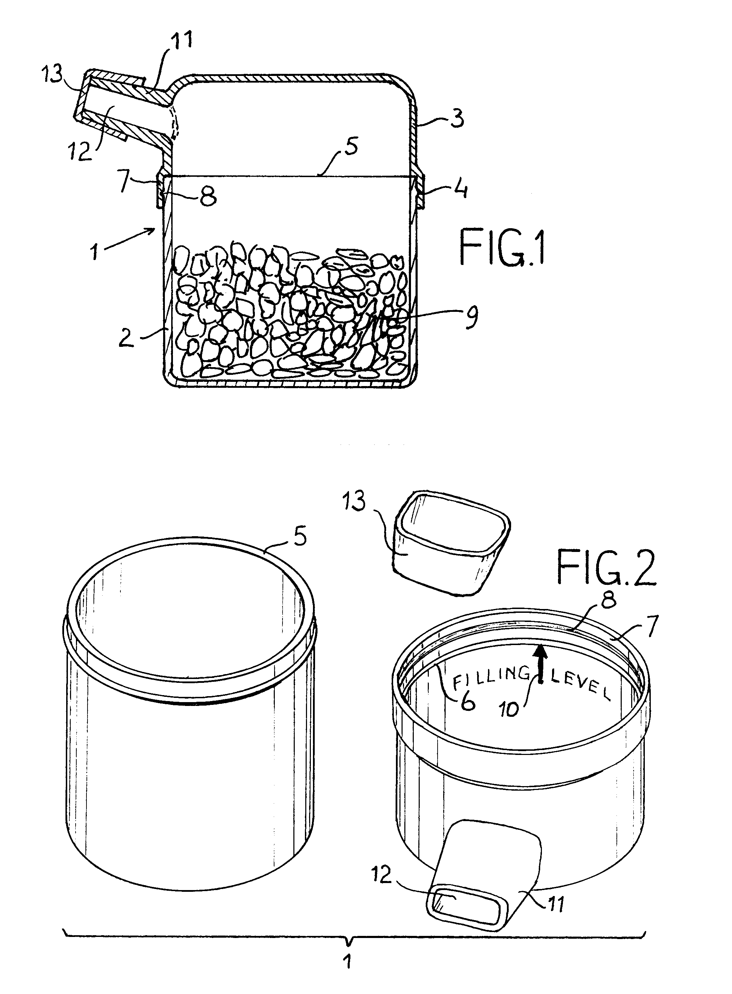

For dosing the correct amount of liquid into the beaker containing a frozen muesli-like product 9 the lid in a preferred embodiment as shown in Fig 2 is cup shaped and provided with a volumetric mark, which in the shown embodiment is formed by the shoulder 6, which is indicated by an arrow 10 and the words "FILLING LEVEL".

For easily consuming the contents of the beaker while walking or displacing oneself without the risk of spilling these contents, a mouthpiece 11 may be arranged on the lid, the bore or opening 12 of which being sufficiently large to allow the particulate contents being sucked through. To prevent the contents from being spoiled during distribution and storage and from being spilled when preparing the contents for consumption a closure cap 13 of elastic polymeric material is snugly fitting the open end of the mouthpiece and thereby closing it.

It does not need explanation that a far more simple and cheap embodiment is formed by a simple plastic tub containing the dry, frozen particulate muesli-like material and being closed by a conventional sealed-on lidding sheet, e.g. lacquered aluminum foil.

The invention will be further exemplified in a non-restricting manner in the following examples.

EXAMPLE I

50 parts of a commercial roasted mixture of 60 parts rolled oats, 10 parts honey, 5 parts hazelnuts, 5 parts cocomash and 10 parts unrefined cane sugar is coated with 10 parts of honey and thereafter with 10 parts of whole milk powder, 70 grams of this mixture is filled into a beaker as described hereinbefore.

A frozen fruit mixture of 25 parts of red currants, 15 parts of bilberries, 20 parts of blackberries and 20 parts of raspberries is prepared. 80 grams of this fruit mixture is filled on top of the roasted mixture into the beaker, whereafter the beaker is closed and subjected to freezing temperatures, e.g. -30°C.

When the contents of the beaker are to be prepared for consumption the beaker is taken from the freezer, the lid removed, filled in an inverted position with hot water up to the mark, emptied into the beaker and repositioned on the beaker, thereby reclosing it. After shaking the reclosed beaker and its contents these contents are ready for consumption, although a softer texture may be obtained by allowing to stand for some 5 to 10 minutes.

EXAMPLE II

The method of Example I is repeated with some amendments:
instead of the roasted mixture a mixture is prepared comprising:

| | |
|---|---|
| rolled oats | 40 parts |
| puffed wheat | 25 parts |
| roasted wheat germs | 5 parts |
| sesame seed | 5 parts |
| chopped pecan nuts | 15 parts |

which is coated with 15 parts of honey and thereafter with 10 parts of skim milk powder. 70 grams of this coated mixture is filled into a container as described before.

Subsequently 80 grams of individually frozen diced fruit is added comprising 20 grams pineapple, 20 grams mango, 20 grams kiwi and 20 grams papaya. Before freezing a little lemon juice is sprayed on the fruit pieces after which unrefined cane sugar is sprinkled on to prevent the pieces from readhering.

It does not need explanation that the simplest embodiment of the invention is a pouch comprising particulate cereals, nuts and frozen fruit. After opening the, preferably hot, liquid may be added to the pouch, or the pouch may be emptied into a beaker or a bowl for preparation.

**Claims**

1. Container comprising particulate cereals, nuts and frozen fruit.

2. Container according to claim 1, additionally comprising at least partly dehydrated milk ingredients.

3. Container according to claim 1 or 2, characterized in that it is reclosable in a liquid tight manner.

4. Container according to any claim 1 to 3, characterised in that the fruit contains added sweetener in the body thereof.

5. Container according to any claim 1 to 4, characterised in that the fruit is diced.

6. Container according to claim 1, 2 or 3, characterized in that it is provided with a mouthpiece which is closed but can be opened and having an opening such that the contents of the container can be sucked through.

7. Container according to claim 3, characterized in that it is provided with a lid, which in inverted position can contain liquid and which bears a volumetric mark which is visible on the inside.

FIG.1

FIG.2

FILLING LEVEL

European
Patent Office

EUROPEAN SEARCH
REPORT

Application Number

EP 90 20 2613

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 573 744   (DACORAS) <br> * figure 1 * | 1-7 | A 47 G 19/00 <br> A 23 L 1/164 |
| X | US-A-4 899 902   (DEMARS) <br> * figures 1-3 * | 1-6 | |
| X | GB-A-2 227 159   (PAGE) <br> * figures 1,2 * | 1-6 | |
| X | US-A-4 714 174   (WILLIAMS) <br> * figure 2 * | 1-5 | |
| A | GB-A-2 042 323   (FREELEY) <br> * page 1, line 73 - line 79 * | 1,7 | |
| A | FOOD SCIENCE AND TECHNOLOGY ABSTRACTS JOURNAL no. 84017020, March 1984; International Food Information Service, Reading, Berkshire, GB; page 679, 'Instant breakfast in a yogurt pot' <br> * abstract & MILK INDUSTRY, 1983, Vol. 85, No. 8, page 13 * | | |

TECHNICAL FIELDS
SEARCHED (Int. Cl.5)

A 47 G
A 23 L

The present search report has been drawn up for all claims

| Place of search | Date of completion of search | Examiner |
|---|---|---|
| The Hague | 03 June 91 | BEUGELING G.L.H. |